# DEMANDE DE BREVET EUROPEEN

(11) **EP 4 691 807 A1**
(43) Date de publication de la demande: **11.02.2026**
(21) Numéro de dépôt: 25194379.1
(22) Date de dépôt: 06.08.2025
(51) Int. Cl.: B60G 11/04, B60G 13/00

(54) **PROCEDE D'OPTIMISATION DE RENFORCEMENT D'AU MOINS UNE SUSPENSION D'UN VEHICULE UTILITAIRE**

(30) Priorité: 09.08.2024 FR 2408817
(71) Demandeur: JSA, 26320 Saint-Marcel-lès-Valence (FR)
(72) Inventeur: CHABERT, Alexis, 26320 Saint-Marcel-Les-Valence (FR); VIOUGEAS, Vincent, 26320 Saint-Marcel-Les-Valence (FR); LEJEUNE, Gaël, 26320 Saint-Marcel-Les-Valence (FR)
(74) Mandataire: INNOV-GROUP

(57) **Abrégé**

Procédé d'optimisation de renforcement d'au moins une suspension d'un véhicule utilitaire possédant une masse maximale autorisée comprise entre 3 tonnes et 4,5 tonnes, comportant des étapes :
- adjoindre une lame (2) de renfort, de préférence en acier, sous chacun des ressorts (1) d'origine, la lame (2) de renfort étant configurée pour épouser la forme du ressort (1) d'origine correspondant, et présenter une raideur comprise entre 30% et 45% de la raideur d'origine ;
- remplacer les deux amortisseurs d'origine par deux amortisseurs (3) dédiés, de préférence de type bitube, présentant chacun une force de compression à basse vitesse, comprise entre 60% et 70% de la force de compression d'origine à basse vitesse, et un entraxe ouvert, compris entre 105% et 125% de l'entraxe ouvert d'origine.

## Description

### Domaine technique

L'invention se rapporte au domaine technique du renforcement d'une suspension d'un véhicule utilitaire.

L'invention trouve son application pour un véhicule utilitaire possédant une masse maximale autorisée (également connue sous l'expression « poids total autorisé en charge » avec l'acronyme PTAC) comprise entre 3 tonnes et 4,5 tonnes.

### État de l'art

Une suspension arrière d'un véhicule utilitaire possédant une masse maximale autorisée comprise entre 3 tonnes et 4,5 tonnes, comporte généralement :
- deux ressorts d'origine, de type monolame en acier ;
- deux amortisseurs d'origine, de type bitube.

Le rôle des ressorts est de maintenir la charge suspendue du véhicule utilitaire de manière flexible. Le rôle des amortisseurs est d'absorber l'énergie emmagasinée, puis l'énergie restituée, par les ressorts. Les amortisseurs permettent notamment d'éviter des oscillations du véhicule utilitaire, par exemple lorsque celui-ci traverse un dos d'âne.

Les deux ressorts d'origine et les deux amortisseurs d'origine de la suspension arrière présentent des réglages figés par le constructeur automobile, quelle que soit l'utilisation finale du véhicule utilitaire. Or, pour certaines applications, la masse à vide du véhicule utilitaire peut fortement augmenter lorsque l'on transforme le véhicule utilitaire selon un carrossage spécifique, par exemple en ajoutant une nacelle ou une benne. On peut citer également l'ajout d'un bras hydraulique, d'une grue hydraulique auxiliaire, d'un malaxeur à béton etc.

Il en résulte une forte sollicitation des suspensions (en particulier la suspension arrière) dégradant fortement l'assiette du véhicule, et susceptible d'occasionner notamment des problèmes de tenue de route, une usure prématurée des pneumatiques et des éléments de la suspension, ou encore une perte de confort de conduite pour le conducteur.

De plus, les réglages des ressorts d'origine et des amortisseurs d'origine sont figés par le constructeur automobile en amont du choix de la motorisation du véhicule utilitaire. Or, les véhicules utilitaires de nouvelle génération possèdent des choix de motorisation variés. Par exemple, le choix d'un moteur électrique par rapport à un moteur thermique va entraîner une augmentation de la masse à vide du véhicule utilitaire de l'ordre de 600 kg.

Il est connu de l'état de la technique d'adjoindre une lame de renfort (généralement en acier) aux ressorts d'origine pour renforcer la suspension arrière du véhicule utilitaire.

Toutefois, la seule adjonction d'une lame de renfort à chacun des ressorts d'origine ne confère pas des résultats entièrement satisfaisants notamment en termes de fiabilité de la suspension, de la tenue de route et du confort de conduite (qualité de l'amortissement) pour le conducteur. En effet, l'importante variabilité de la masse suspendue d'un véhicule utilitaire, principalement liée au carrossage spécifique et au choix de motorisation, nécessite une étude plus approfondie de l'impact de l'ajout d'une lame de renfort à la fois en phase statique (véhicule à l'arrêt) et en phase dynamique (véhicule en situation de roulage).

### Exposé de l'invention

L'invention vise à remédier en tout ou partie aux inconvénients précités. A cet effet, l'invention a pour objet un procédé d'optimisation de renforcement d'au moins une suspension d'un véhicule utilitaire, comportant les étapes :
a) utiliser un véhicule utilitaire possédant une masse maximale autorisée comprise entre 3 tonnes et 4,5 tonnes ; le véhicule utilitaire comportant une suspension arrière comprenant :
   - deux ressorts d'origine, de type monolame en acier, présentant chacun une raideur d'origine comprise entre 86 N.mm⁻¹ et 96 N.mm⁻¹, une flèche d'origine comprise entre 116 mm et 128 mm, une épaisseur au centre d'origine comprise entre 20 mm et 24 mm ;
   - deux amortisseurs d'origine, de type bitube, présentant chacun :
      une force de compression d'origine à basse vitesse, comprise entre 427 N et 472 N,
      une force de détente d'origine à basse vitesse, comprise entre 855 N et 945 N,
      une force de compression d'origine à haute vitesse, comprise entre 950 N et 1050 N,
      une force de détente d'origine à haute vitesse, comprise entre 4370 N et 4830 N,
      un entraxe ouvert d'origine, compris entre 410 mm et 453 mm ;
b) adjoindre une lame de renfort, de préférence en acier, sous chacun des ressorts d'origine, la lame de renfort étant configurée pour :
   - épouser la forme du ressort d'origine correspondant,
   - présenter une raideur comprise entre 30% et 45% de la raideur d'origine ;
c) remplacer les deux amortisseurs d'origine par deux amortisseurs dédiés, de préférence de type bitube, présentant chacun :
   - une force de compression à basse vitesse, comprise entre 60% et 70% de la force de compression d'origine à basse vitesse,
   - un entraxe ouvert, compris entre 105% et 125% de l'entraxe ouvert d'origine.

Ainsi, un tel procédé selon l'invention permet d'obtenir une amélioration des performances de la suspension arrière renforcée par rapport à l'état de la technique en termes de fiabilité, de tenue de route et de confort de conduite pour le conducteur. La combinaison de l'exécution des étapes b) et c) permet d'obtenir une réhausse de la suspension arrière comprise entre 3,5 cm et 5 cm lorsque les masses suspendues exercent une force sur la suspension comprise entre 7000 N et 12000 N (couvrant une grande variabilité de masse suspendue), tout en améliorant la tenue de route (meilleure adhérence et stabilité lors des virages) et le confort de conduite (meilleure absorption des irrégularités de la route) par rapport au tarage des amortisseurs d'origine.

Le procédé selon l'invention peut comporter une ou plusieurs des caractéristiques suivantes.

Selon une caractéristique de l'invention, l'étape b) est exécutée de sorte que la raideur de la lame de renfort est comprise entre 34% et 39% de la raideur d'origine.

Ainsi, un avantage procuré par cette gamme de valeurs est de réduire l'impact d'une variation importante de la masse suspendue sur les performances de la suspension arrière renforcée. En d'autres termes, la sensibilité des performances aux conditions de charge est réduite, améliorant donc l'efficacité de la suspension arrière renforcée.

Selon une caractéristique de l'invention :
- l'étape a) est exécutée de sorte que la raideur d'origine est comprise entre 88 N.mm⁻¹ et 94 N.mm⁻¹ ;
- l'étape b) est exécutée de sorte que la raideur de la lame de renfort est comprise entre 32 N.mm⁻¹ et 34 N.mm⁻¹.

Ainsi, un avantage procuré est de réduire l'impact d'une variation importante de la masse suspendue sur les performances de la suspension arrière renforcée.

Selon une caractéristique de l'invention, la lame de renfort adjointe lors de l'étape b) sous chacun des ressorts d'origine est réalisée en acier, et présente une épaisseur au centre strictement inférieure à l'épaisseur au centre d'origine, l'épaisseur au centre étant comprise entre 54% et 85% de l'épaisseur au centre d'origine, de préférence comprise entre 65% et 71% de l'épaisseur au centre d'origine.

Ainsi, un avantage procuré est de préserver la lame du ressort d'origine en cas de surcharge ou de fatigue de la suspension, la lame de renfort agissant alors comme une sorte de fusible mécanique. De plus, lorsque l'épaisseur au centre de la lame de renfort est comprise entre 65% et 71% de l'épaisseur au centre d'origine, il en résulte une augmentation de la flèche (comprise entre 10% et 15% de la flèche d'origine) de l'ensemble bilame, ce qui permet de s'affranchir d'une cale de réhausse pour augmenter la flèche de l'ensemble bilame.

Selon une caractéristique de l'invention, l'étape b) est exécutée de sorte que l'épaisseur au centre de la lame de renfort est comprise entre 13 mm et 17 mm.

Selon une caractéristique de l'invention :
- l'étape a) est exécutée de sorte que la force de compression d'origine à basse vitesse est comprise entre 445 N et 455 N ;
- l'étape c) est exécutée de sorte que la force de compression à basse vitesse de chaque amortisseur dédié est comprise entre 290 N et 310 N.

Ainsi, un avantage procuré est d'améliorer la tenue de route (meilleure adhérence et stabilité lors des virages) et le confort de conduite (meilleure absorption des irrégularités de la route) par rapport au tarage des amortisseurs d'origine.

Selon une caractéristique de l'invention, l'étape c) est exécutée de sorte que l'entraxe ouvert de chaque amortisseur dédié est compris entre 110% et 122% de l'entraxe ouvert d'origine.

Ainsi, un avantage procuré est d'obtenir des amortisseurs dédiés efficaces vis-à-vis d'une réhausse de la suspension comprise entre 3,5 cm et 5 cm lorsque les masses suspendues exercent une force sur la suspension comprise entre 7000 N et 12000 N.

Selon une caractéristique de l'invention :
- l'étape a) est exécutée de sorte que l'entraxe ouvert d'origine est compris entre 420 mm et 440 mm ;
- l'étape c) est exécutée de sorte que l'entraxe ouvert de chaque amortisseur dédié est compris entre 490 mm et 510 mm.

Selon une caractéristique de l'invention, l'étape c) est exécutée de sorte que les deux amortisseurs dédiés présentent chacun :
- une force de détente à basse vitesse, comprise entre 95% et 105% de la force de détente d'origine à basse vitesse, de préférence égale à la force de détente d'origine à basse vitesse ;
- une force de compression à haute vitesse, comprise entre 95% et 105% de la force de compression d'origine à haute vitesse, de préférence égale à la force de compression d'origine à haute vitesse ;
- une force de détente à haute vitesse, comprise entre 95% et 105% de la force de détente d'origine à haute vitesse, de préférence égale à la force de détente d'origine à haute vitesse.

Ainsi, il a été constaté que ces tarages, proches ou identiques aux tarages d'origine, permettent de conserver une fiabilité, une tenue de route et un confort de conduite satisfaisants.

Selon une caractéristique de l'invention, l'étape a) est exécutée de sorte que le véhicule utilitaire comporte une suspension avant comprenant :
- deux ressorts d'origine, de type spirale, présentant chacun une raideur d'origine comprise entre 70 N.mm⁻¹ et 80 N.mm⁻¹, une longueur à vide d'origine comprise entre 325 mm et 360 mm, une longueur d'origine à 5000 N comprise entre 258 mm et 285 mm ;
- deux amortisseurs d'origine, de type bitube, présentant chacun :
   une force de compression d'origine à basse vitesse, comprise entre 190 N et 210 N,
   une force de détente d'origine à basse vitesse, comprise entre 522 N et 577 N,
   une force de compression d'origine à haute vitesse, comprise entre 427 N et 472 N,
   une force de détente d'origine à haute vitesse, comprise entre 1852 N et 2047 N,
   un entraxe ouvert d'origine, compris entre 232 mm et 257 mm ;
le procédé comportant une étape :
d) remplacer les deux ressorts d'origine de la suspension avant par deux ressorts dédiés de type spirale, présentant chacun :
- une raideur comprise entre 104% et 115% de la raideur d'origine,
- une longueur à 5000 N comprise entre 110% et 120% de la longueur d'origine à 5000 N.

Ainsi, un avantage procuré est d'améliorer la fiabilité de la suspension avant, anticipant une grande variabilité potentielle de la masse suspendue du véhicule utilitaire.

Selon une caractéristique de l'invention, l'étape d) est exécutée de sorte que chaque ressort dédié de la suspension avant présente une longueur à vide comprise entre 105% et 112% de la longueur à vide d'origine.

Ainsi, un avantage procuré est d'obtenir des ressorts dédiés de type spirale efficaces vis-à-vis d'une réhausse de la suspension.

Selon une caractéristique de l'invention :
- l'étape a) est exécutée de sorte que la raideur d'origine des ressorts d'origine de la suspension avant est comprise entre 73,5 N.mm⁻¹ et 76,5 N.mm⁻¹ ;
- l'étape d) est exécutée de sorte que la raideur de chaque ressort dédié est comprise entre 80 N.mm⁻¹ et 84 N.mm⁻¹.

Ainsi, un avantage procuré est de réduire l'impact d'une variation importante de la masse suspendue sur les performances de la suspension avant renforcée.

Selon une caractéristique de l'invention :
- l'étape a) est exécutée de sorte que la longueur d'origine à 5000 N des ressorts d'origine de la suspension avant est comprise entre 266 mm et 277 mm ;
- l'étape d) est exécutée de sorte que la longueur à 5000 N de chaque ressort dédié est comprise entre 310 mm et 315 mm.

Selon une caractéristique de l'invention, le procédé comporte une étape :
e) remplacer les deux amortisseurs d'origine de la suspension avant par deux amortisseurs dédiés, de préférence de type bitube, présentant chacun :
- une force de compression à basse vitesse, comprise entre 140% et 160% de la force de compression d'origine à basse vitesse d'un amortisseur d'origine de la suspension avant ;
- une force de détente à basse vitesse, comprise entre 65% et 80% de la force de détente d'origine à basse vitesse d'un amortisseur d'origine de la suspension avant ;
- une force de compression à haute vitesse, comprise entre 165% et 190% de la force de compression d'origine à haute vitesse d'un amortisseur d'origine de la suspension avant ;
- une force de détente à haute vitesse, comprise entre 135% et 153% de la force de détente d'origine à haute vitesse d'un amortisseur d'origine de la suspension avant ;
- un entraxe ouvert, compris entre 103% et 125% de l'entraxe ouvert d'origine d'un amortisseur d'origine de la suspension avant.

Ainsi, un avantage procuré est d'améliorer la tenue de route (meilleure adhérence et stabilité lors des virages) et le confort de conduite (meilleure absorption des irrégularités de la route et suppression des phénomènes de pompage) par rapport au tarage des amortisseurs d'origine.

Selon une caractéristique de l'invention, l'étape e) est exécutée de sorte que :
- la force de compression d'origine à basse vitesse est comprise entre 194 N et 206 N, et la force de compression à basse vitesse est comprise entre 291 N et 309 N ;
- la force de détente d'origine à basse vitesse est comprise 533 N et 566 N, et la force de détente à basse vitesse est comprise entre 388 N et 412 N ;
- la force de compression d'origine à haute vitesse est comprise entre 436 N et 463 N, et la force de compression à haute vitesse est comprise entre 776 N et 824 N ;
- la force de détente d'origine à haute vitesse est comprise entre 1891 N et 2008 N, la force de détente à haute vitesse est comprise entre 2716 N et 2884 N ;
- l'entraxe ouvert d'origine est compris entre 240 mm et 250 mm, et l'entraxe ouvert est compris entre 259 mm et 300 mm.

Ainsi, un avantage procuré est de réduire l'impact d'une variation importante de la masse suspendue sur les performances de la suspension avant renforcée.

Selon une caractéristique de l'invention, le véhicule utilitaire utilisé lors de l'étape a) comporte un châssis ; la suspension arrière du véhicule utilitaire utilisé lors de l'étape a) comporte :
- une barre anti-roulis, présentant des première et deuxième extrémités ;
- des première et deuxième biellettes, agencées respectivement aux première et deuxième extrémités, et reliées chacune au châssis ;
le procédé comporte une étape consistant à adjoindre une cale à chacune des première et deuxième biellettes, la cale s'étendant entre la biellette correspondante et le châssis.

Ainsi, un avantage procuré est d'éviter que l'ensemble comportant la barre anti-roulis et les première et deuxième biellettes ne limite pas le débattement en détente de le suspension arrière, pouvant occasionner des problèmes de casse ou de rupture de châssis.

L'invention a également pour objet une suspension d'un véhicule utilitaire obtenue par un procédé selon l'invention.

### Définitions

- Par « optimisation de renforcement », on entend le fait de rechercher une amélioration des performances de la suspension renforcée en termes de fiabilité, de tenue de route et de confort de conduite pour le conducteur.
- Par « suspension », on entend les organes mécaniques d'un véhicule permettant de relier les masses non suspendues (e.g. roues, systèmes de freinage etc.) aux masses suspendues (e.g. châssis, moteur etc.). Le châssis ne fait pas partie de la suspension.
- Par « flèche », on entend la flèche à vide (appelée également flèche libre, c'est-à-dire en l'absence de charge) d'une lame.
- Par « épaisseur au centre », on entend l'épaisseur (i.e. dimension suivant un axe vertical) de la lame du ressort d'origine prise dans une zone centrale de la lame.
- Par « basse vitesse », on entend une vitesse de débattement de l'amortisseur égale à 0,05 m/s (±5%). La vitesse de débattement est la vitesse à laquelle la tige de l'amortisseur se déplace à l'intérieur du cylindre.
- Par « haute vitesse », on entend une vitesse de débattement de l'amortisseur égale à 0,4 m/s (±5%).
- Par « entraxe ouvert », on entend la distance entre les deux points de fixation de l'amortisseur lorsque l'amortisseur est en position complètement déployée.
- Par « épouser la forme du ressort d'origine », on entend que la lame de renfort, s'étendant sous le ressort d'origine, suit le contour et la courbure de la lame du ressort d'origine.
- Par « longueur à 5000 N », on entend la longueur du ressort de type spirale lorsqu'une force de 5000 N lui est appliquée.
- Les valeurs X et Y exprimées à l'aide des expressions « entre X et Y » ou « compris entre X et Y » sont incluses dans la plage de valeurs définie.

### Brève description des dessins

D'autres caractéristiques et avantages apparaîtront dans l'exposé détaillé de différents modes de réalisation de l'invention, l'exposé étant assorti d'exemples et de références aux dessins joints.

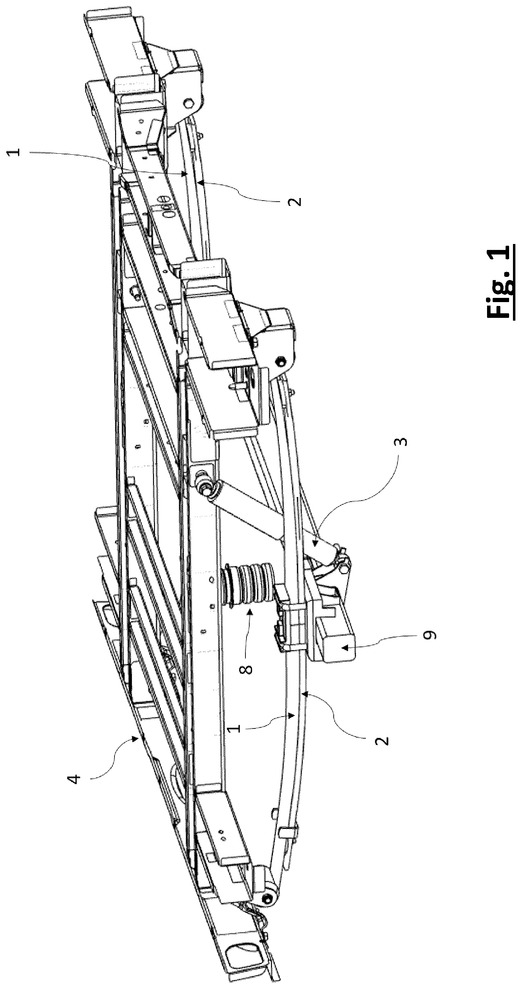

Figure 1 est une vue schématique en perspective d'une suspension arrière obtenue par un procédé selon l'invention, équipant un châssis d'un véhicule utilitaire.

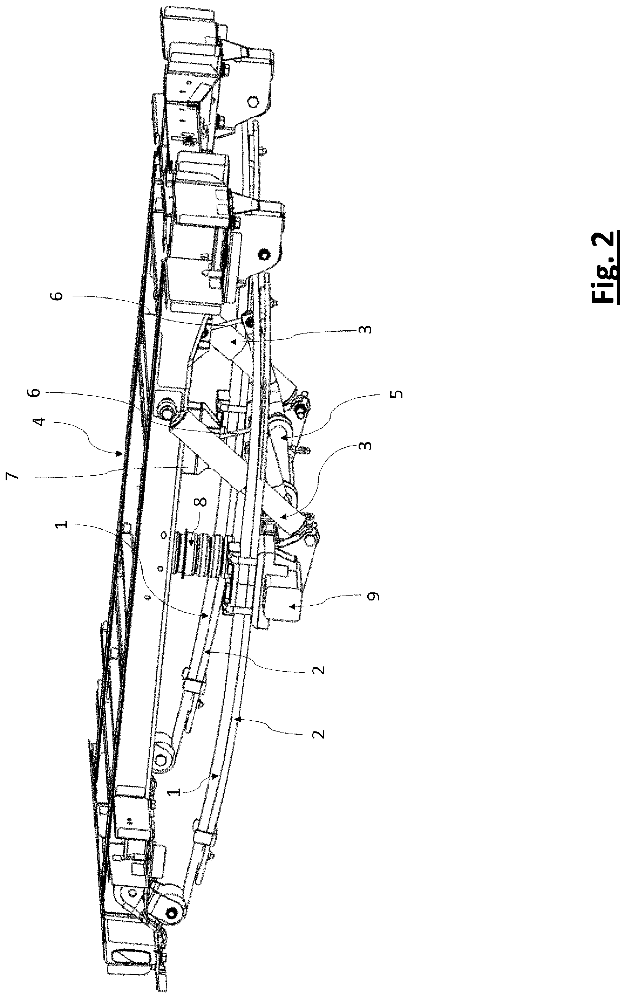

Figure 2 est une vue schématique analogue à la figure 1, en présence d'une barre anti-roulis.

Il est à noter que les dessins décrits ci-avant sont schématiques, et ne sont pas nécessairement à l'échelle par souci de lisibilité et pour en simplifier leur compréhension.

### Exposé détaillé des modes de réalisation

Les éléments identiques ou assurant la même fonction porteront les mêmes références pour les différents modes de réalisation, par souci de simplification.

Un objet de l'invention est un procédé d'optimisation de renforcement d'au moins une suspension d'un véhicule utilitaire, comportant les étapes :
a) utiliser un véhicule utilitaire possédant une masse maximale autorisée comprise entre 3 tonnes et 4,5 tonnes ; le véhicule utilitaire comportant une suspension arrière comprenant :
   - deux ressorts 1 d'origine, de type monolame en acier, présentant chacun une raideur d'origine comprise entre 86 N.mm⁻¹ et 96 N.mm⁻¹, une flèche d'origine comprise entre 116 mm et 128 mm, une épaisseur au centre d'origine comprise entre 20 mm et 24 mm ;
   - deux amortisseurs d'origine, de type bitube, présentant chacun :
      une force de compression d'origine à basse vitesse, comprise entre 427 N et 472 N,
      une force de détente d'origine à basse vitesse, comprise entre 855 N et 945 N,
      une force de compression d'origine à haute vitesse, comprise entre 950 N et 1050 N,
      une force de détente d'origine à haute vitesse, comprise entre 4370 N et 4830 N,
      un entraxe ouvert d'origine, compris entre 410 mm et 453 mm ;
b) adjoindre une lame 2 de renfort, de préférence en acier, sous chacun des ressorts 1 d'origine, la lame 2 de renfort étant configurée pour :
   - épouser la forme du ressort 1 d'origine correspondant,
   - présenter une raideur comprise entre 30% et 45% de la raideur d'origine ;
c) remplacer les deux amortisseurs d'origine par deux amortisseurs 3 dédiés, de préférence de type bitube, présentant chacun :
   - une force de compression à basse vitesse, comprise entre 60% et 70% de la force de compression d'origine à basse vitesse,
   - un entraxe ouvert, compris entre 105% et 125% de l'entraxe ouvert d'origine.

### Suspension arrière

### Etape a)

Le véhicule utilitaire utilisé lors de l'étape a) possède une masse maximale autorisée (également connue sous l'expression « poids total autorisé en charge » avec l'acronyme PTAC) comprise entre 3 tonnes et 4,5 tonnes. A titre d'exemples non limitatifs, le véhicule utilitaire peut comporter une benne, une nacelle, un plateau à ridelles, une caisse frigorifique etc.

Chaque ressort 1 d'origine de la suspension arrière est de type monolame en acier. En d'autres termes, chaque ressort 1 d'origine comporte une unique lame, réalisée en acier. Chaque ressort 1 d'origine de la suspension arrière présente une raideur (appelée raideur d'origine) comprise entre 86 N.mm⁻¹ et 96 N.mm⁻¹. Chaque ressort 1 d'origine de la suspension arrière présente une flèche (appelée flèche d'origine) comprise entre 116 mm et 128 mm. Chaque ressort 1 d'origine présente une épaisseur au centre, prise au centre de la lame, (appelée épaisseur au centre d'origine) comprise entre 20 mm et 24 mm. Chaque ressort 1 d'origine peut présenter une largeur comprise entre 76 mm et 84 mm. Chaque ressort 1 d'origine peut présenter une longueur comprise entre 1368 mm et 1512 mm.

Chaque amortisseur d'origine de la suspension arrière est de type bitube. Chaque amortisseur d'origine de la suspension arrière présente :
- une force de compression d'origine à basse vitesse, comprise entre 427 N et 472 N,
- une force de détente d'origine à basse vitesse, comprise entre 855 N et 945 N,
- une force de compression d'origine à haute vitesse, comprise entre 950 N et 1050 N,
- une force de détente d'origine à haute vitesse, comprise entre 4370 N et 4830 N,
- un entraxe ouvert d'origine, compris entre 410 mm et 453 mm.

### Etape b)

La lame 2 de renfort adjointe sous chacun des ressorts 1 d'origine de la suspension arrière est de préférence réalisée dans un matériau métallique, plus préférentiellement l'acier.

La lame 2 de renfort est configurée pour épouser la forme du ressort 1 d'origine correspondant. La lame 2 de renfort présente avantageusement une largeur égale à la largeur du ressort 1 d'origine. La lame 2 de renfort peut présenter une largeur comprise entre 76 mm et 84 mm. La lame 2 de renfort peut présenter une longueur comprise entre 92% et 96% de la longueur du ressort 1 d'origine. La lame 2 de renfort peut présenter une longueur comprise entre 1285 mm et 1420 mm. La lame 2 de renfort et la lame du ressort 1 d'origine s'étendent suivant une direction longitudinale, c'est-à-dire suivant la longueur du véhicule utilitaire.

La lame 2 de renfort est configurée pour présenter une raideur comprise entre 30% et 45% de la raideur d'origine. L'étape b) est avantageusement exécutée de sorte que la raideur de la lame 2 de renfort est comprise entre 34% et 39% de la raideur d'origine. Lorsque l'étape a) est exécutée de sorte que la raideur d'origine est comprise entre 88 N.mm⁻¹ et 94 N.mm⁻¹, alors l'étape b) est avantageusement exécutée de sorte que la raideur de la lame 2 de renfort est comprise entre 32 N.mm⁻¹ et 34 N.mm⁻¹.

Lorsque la lame 2 de renfort adjointe lors de l'étape b) sous chacun des ressorts 1 d'origine de la suspension arrière est réalisée en acier, la lame 2 de renfort présente avantageusement une épaisseur au centre strictement inférieure à l'épaisseur au centre d'origine. L'épaisseur au centre est avantageusement comprise entre 54% et 85% de l'épaisseur au centre d'origine, de préférence comprise entre 65% et 71% de l'épaisseur au centre d'origine. L'étape b) est avantageusement exécutée de sorte que l'épaisseur au centre de la lame 2 de renfort est comprise entre 13 mm et 17 mm.

Lorsque l'épaisseur au centre de la lame 2 de renfort est comprise entre 65% et 71% de l'épaisseur au centre d'origine, il en résulte une augmentation de la flèche (comprise entre 10% et 15% de la flèche d'origine) de l'ensemble bilame (i.e. la lame du ressort 1 d'origine et la lame 2 de renfort sous-jacente), ce qui permet de s'affranchir d'une cale de réhausse pour augmenter la flèche de l'ensemble bilame. La flèche de l'ensemble bilame définit un point haut et un point bas de la suspension arrière. Le point haut peut être défini par une butée 8 de chocs, montée sur le châssis 4 du véhicule utilitaire.

L'ensemble bilame est préférentiellement monté sur l'essieu 9 arrière du véhicule utilitaire et sur le châssis 4.

### Etape c)

Chaque amortisseur 3 dédié remplaçant un amortisseur d'origine de la suspension arrière est de préférence de type bitube. Chaque amortisseur 3 dédié remplaçant un amortisseur d'origine de la suspension arrière est de préférence monté sur l'essieu 9 arrière du véhicule utilitaire et sur le châssis 4.

Chaque amortisseur 3 dédié de la suspension arrière présente :
- une force de compression à basse vitesse, comprise entre 60% et 70% de la force de compression d'origine à basse vitesse,
- un entraxe ouvert, compris entre 105% et 125% de l'entraxe ouvert d'origine.

Lorsque l'étape a) est exécutée de sorte que la force de compression d'origine à basse vitesse est comprise entre 445 N et 455 N, alors l'étape c) est avantageusement exécutée de sorte que la force de compression à basse vitesse de chaque amortisseur 3 dédié est comprise entre 290 N et 310 N.

L'étape c) est avantageusement exécutée de sorte que l'entraxe ouvert de chaque amortisseur 3 dédié de la suspension arrière est compris entre 110% et 122% de l'entraxe ouvert d'origine. Lorsque l'étape a) est exécutée de sorte que l'entraxe ouvert d'origine est compris entre 420 mm et 440 mm, alors l'étape c) est avantageusement exécutée de sorte que l'entraxe ouvert de chaque amortisseur 3 dédié de la suspension arrière est compris entre 490 mm et 510 mm. Chaque amortisseur 3 dédié de la suspension arrière peut se comprimer librement au point haut de la suspension et se détendre librement au point bas de la suspension. Le point dit « zéro » de la suspension arrière correspond à la hauteur du véhicule utilitaire en condition de roulage. La distance entre le point zéro et le point haut est le débattement disponible en compression. La distance entre le point zéro et le point bas est le débattement disponible en détente. Chaque amortisseur 3 dédié de la suspension arrière peut présenter un entraxe fermé compris entre 308 mm et 342 mm.

L'étape c) est avantageusement exécutée de sorte que les deux amortisseurs 3 dédiés de la suspension arrière présentent chacun une force de détente à basse vitesse, comprise entre 95% et 105% de la force de détente d'origine à basse vitesse, de préférence égale à la force de détente d'origine à basse vitesse.

L'étape c) est avantageusement exécutée de sorte que les deux amortisseurs 3 dédiés de la suspension arrière présentent chacun une force de compression à haute vitesse, comprise entre 95% et 105% de la force de compression d'origine à haute vitesse, de préférence égale à la force de compression d'origine à haute vitesse.

L'étape c) est avantageusement exécutée de sorte que les deux amortisseurs 3 dédiés de la suspension arrière présentent chacun une force de détente à haute vitesse, comprise entre 95% et 105% de la force de détente d'origine à haute vitesse, de préférence égale à la force de détente d'origine à haute vitesse.

### Barre anti-roulis

Le véhicule utilitaire utilisé lors de l'étape a) comporte un châssis 4 et la suspension arrière du véhicule utilitaire utilisé lors de l'étape a) peut comporter :
- une barre anti-roulis 5, présentant des première et deuxième extrémités ;
- des première et deuxième biellettes 6, agencées respectivement aux première et deuxième extrémités, et reliées chacune au châssis 4.

Le procédé comporte avantageusement une étape consistant à adjoindre une cale 7 à chacune des première et deuxième biellettes 6, la cale 7 s'étendant entre la biellette 6 correspondante et le châssis 4.

La barre anti-roulis 5 peut présenter un diamètre compris entre 21 mm et 23 mm. La barre anti-roulis 5 peut présenter une longueur comprise entre 209 mm et 231 mm. La barre anti-roulis 5 peut présenter une largeur comprise entre 817 mm et 903 mm. Chacune des première et deuxième biellettes peut présenter un entraxe compris entre 100 mm et 110 mm. La cale 7 est avantageusement une cale de rallonge adaptée pour rallonger la biellette 6 correspondante de 3 cm.

### Suspension avant

### Etape a)

L'étape a) peut être exécutée de sorte que le véhicule utilitaire comporte une suspension avant comprenant :
- deux ressorts d'origine, de type spirale, présentant chacun une raideur d'origine comprise entre 70 N.mm⁻¹ et 80 N.mm⁻¹, une longueur à vide d'origine comprise entre 325 mm et 360 mm, une longueur d'origine à 5000 N comprise entre 258 mm et 285 mm ;
- deux amortisseurs d'origine, de type bitube, présentant chacun :
   une force de compression d'origine à basse vitesse, comprise entre 190 N et 210 N,
   une force de détente d'origine à basse vitesse, comprise entre 522 N et 577 N,
   une force de compression d'origine à haute vitesse, comprise entre 427 N et 472 N,
   une force de détente d'origine à haute vitesse, comprise entre 1852 N et 2047 N,
   un entraxe ouvert d'origine, compris entre 232 mm et 257 mm.

### Etape d)

Le procédé comporte avantageusement une étape d) consistant à remplacer les deux ressorts d'origine de la suspension avant par deux ressorts dédiés de type spirale, présentant chacun :
- une raideur comprise entre 104% et 115% de la raideur d'origine,
- une longueur à 5000 N comprise entre 110% et 120% de la longueur d'origine à 5000 N.

L'étape d) est avantageusement exécutée de sorte que chaque ressort dédié de la suspension avant présente une longueur à vide comprise entre 105% et 112% de la longueur à vide d'origine. La longueur à vide de chaque ressort dédié de la suspension avant peut être compris entre 370 mm et 376 mm.

Lorsque l'étape a) est exécutée de sorte que la raideur d'origine des ressorts d'origine de la suspension avant est comprise entre 73,5 N.mm⁻¹ et 76,5 N.mm⁻¹, alors l'étape d) est avantageusement exécutée de sorte que la raideur de chaque ressort dédié de la suspension avant est comprise entre 80 N.mm⁻¹ et 84 N.mm⁻¹.

Lorsque l'étape a) est exécutée de sorte que la longueur d'origine à 5000 N des ressorts d'origine de la suspension avant est comprise entre 266 mm et 277 mm, alors l'étape d) est avantageusement exécutée de sorte que la longueur à 5000 N de chaque ressort dédié de la suspension avant est comprise entre 310 mm et 315 mm.

### Etape e)

Le procédé comporte avantageusement une étape e) consistant à remplacer les deux amortisseurs d'origine de la suspension avant par deux amortisseurs dédiés, de préférence de type bitube, présentant chacun :
- une force de compression à basse vitesse, comprise entre 140% et 160% de la force de compression d'origine à basse vitesse d'un amortisseur d'origine de la suspension avant ;
- une force de détente à basse vitesse, comprise entre 65% et 80% de la force de détente d'origine à basse vitesse d'un amortisseur d'origine de la suspension avant ;
- une force de compression à haute vitesse, comprise entre 165% et 190% de la force de compression d'origine à haute vitesse d'un amortisseur d'origine de la suspension avant ;
- une force de détente à haute vitesse, comprise entre 135% et 153% de la force de détente d'origine à haute vitesse d'un amortisseur d'origine de la suspension avant ;
- un entraxe ouvert, compris entre 103% et 125% de l'entraxe ouvert d'origine d'un amortisseur d'origine de la suspension avant.

Lorsque la force de compression d'origine à basse vitesse d'un amortisseur d'origine de la suspension avant est comprise entre 194 N et 206 N, alors l'étape e) est avantageusement exécutée de sorte que la force de compression à basse vitesse de l'amortisseur dédié de la suspension avant est comprise entre 291 N et 309 N.

Lorsque la force de détente d'origine à basse vitesse d'un amortisseur d'origine de la suspension avant est comprise 533 N et 566 N, alors l'étape e) est avantageusement exécutée de sorte que la force de détente à basse vitesse de l'amortisseur dédié de la suspension avant est comprise entre 388 N et 412 N.

Lorsque la force de compression d'origine à haute vitesse d'un amortisseur d'origine de la suspension avant est comprise entre 436 N et 463 N, alors l'étape e) est avantageusement exécutée de sorte que la force de compression à haute vitesse de l'amortisseur dédié de la suspension avant est comprise entre 776 N et 824 N.

Lorsque la force de détente d'origine à haute vitesse d'un amortisseur d'origine de la suspension avant est comprise entre 1891 N et 2008 N, alors l'étape e) est avantageusement exécutée de sorte que la force de détente à haute vitesse de l'amortisseur dédié de la suspension avant est comprise entre 2716 N et 2884 N.

Lorsque l'entraxe ouvert d'origine d'un amortisseur d'origine de la suspension avant est compris entre 240 mm et 250 mm, alors l'étape e) est avantageusement exécutée de sorte que l'entraxe ouvert de l'amortisseur dédié de la suspension avant est compris entre 259 mm et 300 mm.

L'invention ne se limite pas aux modes de réalisation exposés. L'homme du métier est mis à même de considérer leurs combinaisons techniquement opérantes, et de leur substituer des équivalents.

## Revendications

1. Procédé d'optimisation de renforcement d'au moins une suspension d'un véhicule utilitaire, comportant les étapes :
a) utiliser un véhicule utilitaire possédant une masse maximale autorisée comprise entre 3 tonnes et 4,5 tonnes ; le véhicule utilitaire comportant une suspension arrière comprenant :
- deux ressorts (1) d'origine, de type monolame en acier, présentant chacun une raideur d'origine comprise entre 86 N.mm⁻¹ et 96 N.mm⁻¹, une flèche d'origine comprise entre 116 mm et 128 mm, une épaisseur au centre d'origine comprise entre 20 mm et 24 mm ;
- deux amortisseurs d'origine, de type bitube, présentant chacun :
une force de compression d'origine à basse vitesse, comprise entre 427 N et 472 N,
une force de détente d'origine à basse vitesse, comprise entre 855 N et 945 N,
une force de compression d'origine à haute vitesse, comprise entre 950 N et 1050 N,
une force de détente d'origine à haute vitesse, comprise entre 4370 N et 4830 N,
un entraxe ouvert d'origine, compris entre 410 mm et 453 mm ;
b) adjoindre une lame (2) de renfort, de préférence en acier, sous chacun des ressorts (1) d'origine, la lame (2) de renfort étant configurée pour :
- épouser la forme du ressort (1) d'origine correspondant,
- présenter une raideur comprise entre 30% et 45% de la raideur d'origine ;
c) remplacer les deux amortisseurs d'origine par deux amortisseurs (3) dédiés, de préférence de type bitube, présentant chacun :
- une force de compression à basse vitesse, comprise entre 60% et 70% de la force de compression d'origine à basse vitesse,
- un entraxe ouvert, compris entre 105% et 125% de l'entraxe ouvert d'origine.

2. Procédé selon la revendication 1, dans lequel l'étape b) est exécutée de sorte que la raideur de la lame (2) de renfort est comprise entre 34% et 39% de la raideur d'origine.

3. Procédé selon la revendication 1 ou 2, dans lequel :
- l'étape a) est exécutée de sorte que la raideur d'origine est comprise entre 88 N.mm⁻¹ et 94 N.mm⁻¹ ;
- l'étape b) est exécutée de sorte que la raideur de la lame (2) de renfort est comprise entre 32 N.mm⁻¹ et 34 N.mm⁻¹.

4. Procédé selon l'une des revendications 1 à 3, dans lequel la lame (2) de renfort adjointe lors de l'étape b) sous chacun des ressorts (1) d'origine est réalisée en acier, et présente une épaisseur au centre strictement inférieure à l'épaisseur au centre d'origine, l'épaisseur au centre étant comprise entre 54% et 85% de l'épaisseur au centre d'origine, de préférence comprise entre 65% et 71% de l'épaisseur au centre d'origine.

5. Procédé selon l'une des revendications 1 à 4, dans lequel l'étape b) est exécutée de sorte que l'épaisseur au centre de la lame (2) de renfort est comprise entre 13 mm et 17 mm.

6. Procédé selon l'une des revendications 1 à 5, dans lequel :
- l'étape a) est exécutée de sorte que la force de compression d'origine à basse vitesse est comprise entre 445 N et 455 N ;
- l'étape c) est exécutée de sorte que la force de compression à basse vitesse de chaque amortisseur (3) dédié est comprise entre 290 N et 310 N.

7. Procédé selon l'une des revendications 1 à 6, dans lequel l'étape c) est exécutée de sorte que l'entraxe ouvert de chaque amortisseur (3) dédié est compris entre 110% et 122% de l'entraxe ouvert d'origine.

8. Procédé selon l'une des revendications 1 à 7, dans lequel :
- l'étape a) est exécutée de sorte que l'entraxe ouvert d'origine est compris entre 420 mm et 440 mm ;
- l'étape c) est exécutée de sorte que l'entraxe ouvert de chaque amortisseur (3) dédié est compris entre 490 mm et 510 mm.

9. Procédé selon l'une des revendications 1 à 8, dans lequel l'étape c) est exécutée de sorte que les deux amortisseurs (3) dédiés présentent chacun :
- une force de détente à basse vitesse, comprise entre 95% et 105% de la force de détente d'origine à basse vitesse, de préférence égale à la force de détente d'origine à basse vitesse ;
- une force de compression à haute vitesse, comprise entre 95% et 105% de la force de compression d'origine à haute vitesse, de préférence égale à la force de compression d'origine à haute vitesse ;
- une force de détente à haute vitesse, comprise entre 95% et 105% de la force de détente d'origine à haute vitesse, de préférence égale à la force de détente d'origine à haute vitesse.

10. Procédé selon l'une des revendications 1 à 9, dans lequel l'étape a) est exécutée de sorte que le véhicule utilitaire comporte une suspension avant comprenant :
- deux ressorts d'origine, de type spirale, présentant chacun une raideur d'origine comprise entre 70 N.mm⁻¹ et 80 N.mm⁻¹, une longueur à vide d'origine comprise entre 325 mm et 360 mm, une longueur d'origine à 5000 N comprise entre 258 mm et 285 mm ;
- deux amortisseurs d'origine, de type bitube, présentant chacun :
une force de compression d'origine à basse vitesse, comprise entre 190 N et 210 N,
une force de détente d'origine à basse vitesse, comprise entre 522 N et 577 N,
une force de compression d'origine à haute vitesse, comprise entre 427 N et 472 N,
une force de détente d'origine à haute vitesse, comprise entre 1852 N et 2047 N,
un entraxe ouvert d'origine, compris entre 232 mm et 257 mm ;
le procédé comportant une étape :
d) remplacer les deux ressorts d'origine de la suspension avant par deux ressorts dédiés de type spirale, présentant chacun :
- une raideur comprise entre 104% et 115% de la raideur d'origine,
- une longueur à 5000 N comprise entre 110% et 120% de la longueur d'origine à 5000 N.

11. Procédé selon la revendication 10, dans lequel l'étape d) est exécutée de sorte que chaque ressort dédié de la suspension avant présente une longueur à vide comprise entre 105% et 112% de la longueur à vide d'origine.

12. Procédé selon la revendication 10 ou 11, dans lequel :
- l'étape a) est exécutée de sorte que la raideur d'origine des ressorts d'origine de la suspension avant est comprise entre 73,5 N.mm⁻¹ et 76,5 N.mm⁻¹ ;
- l'étape d) est exécutée de sorte que la raideur de chaque ressort dédié est comprise entre 80 N.mm⁻¹ et 84 N.mm⁻¹.

13. Procédé selon l'une des revendications 10 à 12, dans lequel :
- l'étape a) est exécutée de sorte que la longueur d'origine à 5000 N des ressorts d'origine de la suspension avant est comprise entre 266 mm et 277 mm ;
- l'étape d) est exécutée de sorte que la longueur à 5000 N de chaque ressort dédié est comprise entre 310 mm et 315 mm.

14. Procédé selon l'une des revendications 10 à 13, comportant une étape :
e) remplacer les deux amortisseurs d'origine de la suspension avant par deux amortisseurs dédiés, de préférence de type bitube, présentant chacun :
- une force de compression à basse vitesse, comprise entre 140% et 160% de la force de compression d'origine à basse vitesse d'un amortisseur d'origine de la suspension avant ;
- une force de détente à basse vitesse, comprise entre 65% et 80% de la force de détente d'origine à basse vitesse d'un amortisseur d'origine de la suspension avant ;
- une force de compression à haute vitesse, comprise entre 165% et 190% de la force de compression d'origine à haute vitesse d'un amortisseur d'origine de la suspension avant ;
- une force de détente à haute vitesse, comprise entre 135% et 153% de la force de détente d'origine à haute vitesse d'un amortisseur d'origine de la suspension avant ;
- un entraxe ouvert, compris entre 103% et 125% de l'entraxe ouvert d'origine d'un amortisseur d'origine de la suspension avant.

15. Procédé selon la revendication 14, dans lequel l'étape e) est exécutée de sorte que :
- la force de compression d'origine à basse vitesse est comprise entre 194 N et 206 N, et la force de compression à basse vitesse est comprise entre 291 N et 309 N ;
- la force de détente d'origine à basse vitesse est comprise 533 N et 566 N, et la force de détente à basse vitesse est comprise entre 388 N et 412 N ;
- la force de compression d'origine à haute vitesse est comprise entre 436 N et 463 N, et la force de compression à haute vitesse est comprise entre 776 N et 824 N ;
- la force de détente d'origine à haute vitesse est comprise entre 1891 N et 2008 N, la force de détente à haute vitesse est comprise entre 2716 N et 2884 N ;
- l'entraxe ouvert d'origine est compris entre 240 mm et 250 mm, et l'entraxe ouvert est compris entre 259 mm et 300 mm.

16. Procédé selon l'une des revendications 1 à 15, dans lequel le véhicule utilitaire utilisé lors de l'étape a) comporte un châssis (4) ; la suspension arrière du véhicule utilitaire utilisé lors de l'étape a) comporte :
- une barre anti-roulis (5), présentant des première et deuxième extrémités ;
- des première et deuxième biellettes (6), agencées respectivement aux première et deuxième extrémités, et reliées chacune au châssis (4) ;
le procédé comporte une étape consistant à adjoindre une cale (7) à chacune des première et deuxième biellettes (6), la cale (7) s'étendant entre la biellette (6) correspondante et le châssis (4).

17. Suspension d'un véhicule utilitaire obtenue par un procédé selon l'une des revendications 1 à 16.
